# EUROPÄISCHE PATENTSCHRIFT

(11) **EP 3 973 354 B1**
(45) Veröffentlichungstag und Bekanntmachung des Hinweises auf die Patenterteilung: **23.10.2024**
(21) Anmeldenummer: 20726322.9
(22) Anmeldetag: 08.05.2020
(51) Int. Cl.: G03B 17/56, G03B 17/02, G03B 17/18, G03B 13/18, G03B 13/32

(54) **VERFAHREN UND VORRICHTUNG ZUR STEUERUNG VON MOTOREN IM FILM- UND BROADCASTBEREICH**
METHOD AND DEVICE FOR CONTROLLING MOTORS IN THE FILM AND BROADCASTING INDUSTRY
PROCÉDÉ ET DISPOSITIF DE COMMANDE DE MOTEURS DANS LE SECTEUR DU FILM ET DE LA RADIODIFFUSION

(30) Priorität: 20.05.2019 DE 102019003510
(43) Veröffentlichungstag der Anmeldung: 30.03.2022
(73) Patentinhaber: Maier, Florian, 82205 Gilching (DE)
(72) Erfinder: Maier, Florian, 82205 Gilching (DE)
(86) Internationale Anmeldenummer: PCT/EP2020/062943
(87) Internationale Veröffentlichungsnummer: WO 2020/234011

(56) Entgegenhaltungen:
- EP-A1- 1 918 196
- EP-A2- 2 706 407
- WO-A1-97/25657
- DE-A1- 102016 118 460
- DE-A1- 19 926 597
- DE-U1- 202009 014 504
- US-A- 5 059 019
- US-A1- 2005 156 892

## Beschreibung

Die Erfindung betrifft ein Verfahren zur Steuerung oder Regelung von Motoren im Film- und Broadcastbereich gemäß dem Oberbegriff des Anspruchs 1 oder 2, sowie eine Vorrichtung zu dessen Durchführung gemäß dem Oberbegriff des Anspruchs 14 oder 15.

### Stand der Technik:

Im Filmbereich werden bisher Schärfe, Blende und Zoom üblicherweise elektronisch über externe Motoren, die an den Objektiven einer Kamera angebracht werden, gesteuert. Über ein Handsteuergerät, das in der Regel ein Handrad für den Fokus, einen Schieberegler für die Blende und ggf. eine Art Joystick für die Zoomeinstellung besitzt, kann der Nutzer bis zu drei am Objektiv angebrachte Motoren aus einiger Entfernung steuern, die dann jeweils Fokus, Blende und ggf. Zoom steuern. Die Datenübertragung erfolgt in der Regel kabellos. Dabei besitzen die Eingabegeräte üblicherweise Potentiometer oder Inkrementalgeber, die beispielsweise die jeweilige Stellung des Handrads erfassen und an die Motoren weitergeben. Ein solches Eingabegerät hat in der Regel zwei feste Endanschläge. Im Rahmen einer Kalibrierung werden diese Endanschläge den Endanschlägen des Objektivs zugeordnet, d.h. der Umdrehungsbereich von knapp einer Umdrehung wird dem Umdrehungsbereich des Objektivs zugeordnet. Abweichend dazu kann auch ein kleiner Bereich des Objektivs dem gesamten Umdrehungsbereich des Eingabegeräts zugeordnet werden, um so noch feiner Steuern zu können (DE 10 2004 015 947 A1). Ähnliches gilt für die Steuerung von sogenannten Remote-Heads (schwenkbare Kameraköpfe), oder Kamerakräne, die über entweder Joystick, Schieberegler oder Handräder gesteuert werden.

Ein Handsteuergerät mit haptischer Rückmeldung ist auch aus EP2706407A und WO9725657A bekannt.

### Problemstellungen:

Bei den bisher üblichen Steuerungsverfahren gibt es mehrere Probleme. Im Fall, dass der gesamte Umdrehungsbereich des Eingabegeräts lediglich einem kleinen Bereich des Objektivs zugeordnet wird, um so noch feiner steuern zu können, besteht das Problem, dass auch nur der kleine Bereich des Objektivs mit dem gesamten Umdrehungsbereich des Eingabebereichs gesteuert werden kann und nicht der gesamte Bereich. D.h. möchte man noch etwas weiter über diesen gespreizten Bereich hinaus steuern, weil die Situation vor der Kamera es erfordert, so befindet man sich bereits am mechanischen Endanschlag des Handrads und kann nicht mehr weiterdrehen.

Ein weiteres Problem ist, dass der Nutzer ausschließlich eine visuelle Rückmeldung über ein Display, jedoch keinerlei haptische Rückmeldung bekommt. Es ist zwar ein System bekannt, das bei einer bestimmten Markierung einen kleinen Motor mit einer Unwucht ansteuert und damit das gesamte Handsteuergerät vibrieren lässt (ARRI WCU-4 Wireless Compact Unit, USER MANUAL vom 12. Dezember 2018). Dies hat aber zwei Nachteile: Das Handrad selbst vibriert nicht, sondern das gesamte Gerät; es ist daher wenig intuitiv und fühlt sich fremd bzw. nicht der jeweiligen Achse (z.B. Fokus, Iris, Zoom) zugehörig an. Darüber hinaus ist es schwierig, die beabsichtigte Position genau anzufahren, da die Reaktionszeit des Menschen bei schnellen Steuerbewegungen zu langsam ist. Zum anderen kann damit nur die Markierung einer einzigen Achse signalisiert werden, denn wenn das gesamte Gerät vibriert, kann nicht zugeordnet werden, um welche Achse es sich bei mehreren Achsen eigentlich handelt.

Weiterhin kann eine beispielsweise durch Hindernisse hervorgerufene vorübergehende Schwergängigkeit einer angesteuerten Achse nicht dargestellt werden, wenn zum Beispiel ein Kabel im Weg ist und dadurch die mechanische Verstellvorrichtung blockiert. Eine justierbare Reibung der Einstellvorrichtung kann bei den bestehenden Systemen nur einheitlich für das gesamte Bedienelement mechanisch durch Ändern einer Kontermutter festgelegt werden.

Ein weiteres Problem besteht darin, dass bei zwischenzeitlichem manuellen Verstellen des jeweiligen Motors am Objektiv die Zuordnung der Position des Objektivs (oder allgemein: der angetriebenen Mechanik) nicht mehr mit der Stellung des Handrads übereinstimmt. Hier gibt es bislang nur zwei Möglichkeiten: Ein Neukalibieren, bei dem die Endanschläge des Objektivs wieder den Endanschlägen des Handrads zugeordnet werden oder, solange die Encoder des jeweiligen Motors fortwährend ihre Positionen an das Eingabegerät gesendet haben, das Fahren des jeweiligen Motors auf die eingestellte Handradposition. Dadurch ändert sich im angeführten Beispiel allerdings durch die nun veränderte Schärfe, Iris oder Zoomeinstellung auch der Bildinhalt, was in den meisten Fällen vermieden werden soll. Ähnliche Probleme treten auch bei anderweitig angetriebener Mechanik auf.

Weiterhin ist es mit den bisherigen Geräten nicht möglich, ein unterstütztes sogenanntes Schärfeziehen (oder in einem anderen Beispiel: ein unterstütztes Schwenken eines Kamerakopfes) zu ermöglichen. Damit ist gemeint, dass dem Nutzer bisher keinerlei Hilfestellung beim exakten Fokussieren (bzw. Hilfestellung beim präzisen Schwenken eines Kamerakopfes) zuteil wird, außer durch die optische Anzeige der Entfernung des scharfzustellenden Objekts von der Kamera auf einem externen Display mit Hilfe von Abstandsmessgeräten. Das Schärfeziehen selbst wird dem Nutzer aber nicht abgenommen. Es gibt zwar erste Ideen zum automatischen Schärfen, aber beide Betriebsmodi schließen sich gegenseitig aus: entweder bedient der Nutzer die Schärfe selbst oder die Automatik schärft alleine. Beides gleichzeitig sieht der Stand der Technik nicht vor. Es gibt nur den harten Wechsel zwischen beiden Modi, zwischen denen aktiv umgeschaltet werden muss (DE 10 2004 015 947 A1).

Ein weiteres Problem betrifft die Zuordnung von echten Eingabewerten zur Stellung des Eingabegerätes. Es gibt zwar Ansätze ein Display auf einen Zylindersektor des Handrads zu platzieren, dieses ist aber auf die Breite der beiden Endanschläge beschränkt (DE 10 2011 121 021 A1).

In DE 197 12 049 A1 ist eine Bedienvorrichtung für eine manuelle Eingabe von Informationen in ein Gerät beschrieben. Die US 2003 / 0184.518 A1 beschreibt ein Gerät mit haptischer Rückmeldung, das aus einer Bedieneinheit, einem die haptische Rückmeldung erzeugenden Antriebselement und einer Steuereinheit für das Antriebselement besteht. Die DE 10 2015 110 633 A1 offenbart eine haptische Bedieneinheit und ein Verfahren zum Bedienen von Fahrzeugen, wobei eine haptische Bedieneinrichtung mit einer Dreheinheit verwendet wird und auf einer Anzeigeeinheit auswählbare Menüpunkte angezeigt werden, und wobei durch Drehen der Dreheinheit ein Menüpunkt selektiert wird. In der US 2007 / 027 9401 A1 wird ein System und ein Verfahren für eine Drehbewegung in einem hybriden haptischen Gerät beschrieben, das aus einem Knopf besteht, der über eine Welle auf einer Grundplatte drehbar gelagert ist.

Allen vier letztgenannten Druckschriften ist gemein, dass die dort beschriebenen Verfahren und Vorrichtungen lediglich mechanisches Verhalten elektronisch imitieren.

### Problemlösung:

Die Probleme der oben genannten Einschränkungen werden durch die Merkmale des Verfahrens-Anspruches 1 oder 2 bzw. Vorrichtungs-Anspruchs 14 oder 15 gelöst.

Die vorliegende Erfindung betrifft die Steuerung oder Regelung von Motoren über Funk oder Kabel, zumindest indirekt, für Bewegungsachsen von Geräten im Film- oder Broadcastbereich bestehend aus einer Rechnereinheit und einem Bedienteil, wie z.B. einer Handeinheit. Dabei sind die Bewegungsachsen an einer Mechanik durch zwei Grenzen / Endanschläge festgelegt. Das Bedienteil besteht dabei aus mindestens einem Bedienelement mit einem eingebauten elektromechanischen Element, das eine dynamische haptische Rückmeldung auf dieses Bedienelement erzeugen kann. Das Bedienelement kann ein Handrad oder ein Schieberegler sein. Das elektromagnetische Element ist z.B. ein bürstenloser Motor, der ggf. über ein Getriebe eine Kraft auf das Bedienelement durch eingegebene oder ausgelesene Parameter ausüben kann, dynamisch veränderbar ist und außerdem manuell übersteuert werden kann. Ein solcher Parameter kann der Abstand eines Objektes zur Aufnahmekamera, aber auch eine Zustandsänderung des Objektes sein, z.B. ein Platzen eines Luftballons, bei dem in diesem Moment auf ein anderes Objekt geschärft werden soll.

Das Verfahren und die Vorrichtung zu dessen Durchführung soll im Folgenden am Beispiel des Handrads beschrieben werden. Selbstverständlich können die erläuterten Prinzipien analog auf einen Schieberegler übertragen werden. Die Drehbewegung ist dann beim Schieberegler eine lineare Bewegung.

Die Erfindung sieht vor, dass das Handrad mit einem geeigneten Motor und optimalerweise Drehwinkelsensoren für die inkrementelle oder absolute Position des Handrads ausgestattet ist. Durch eingegebene oder an weiteren Geräten oder Motoren ausgelesene Parameter soll diese Kraft auf das Handrad dynamisch einstellbar sein. Unter "dynamisch" wird auch verstanden, dass sich ein bestimmter Zustand der Kraft auf das Handrad über einen gewissen Zeitraum nicht ändern muss, aber dennoch jederzeit ohne mechanisches Einwirken vom Nutzer (also ohne Nachstellen der Reibung eines Handrads durch eine Einstellschraube) ändern und in einen anderen Zustand überführt werden kann.

Wird die von der Rechnereinheit errechnete Kraft auf das Handrad ausgeübt, so ist dieses für den Nutzer entweder blockiert oder schwergängiger oder es unterstützt das Drehen per Hand oder bewegt sich von selbst auf eine bestimmte Position oder mit einer definierten Geschwindigkeit in eine bestimmte Richtung. Wird keine derartige Kraft auf das Handrad ausgeübt, so ist dieses für den Nutzer ohne großen Widerstand frei drehend und kann ähnlich einem normalen Handrad benutzt werden. Die Kraft auf das Handrad kann mit den entsprechenden Parametern individuell und dynamisch eingestellt werden. Trotzdem ist es möglich durch den Nutzer eine zusätzliche Kraft auf das Handrad zu überlagern, wobei eine Rechnereinheit in der Lage sein kann, diese überlagerte Kraft festzustellen und ggf. entsprechend darauf zu reagieren, wie später an Beispielen noch erläutert wird. Eingegebene oder ausgelesene Parameter können aus den Werten eines Abstandssensors von Aufnahmeobjekten zur Kamera oder dem zu steuernden Objekt (z.B. der Abstand eines Schauspielers zur Kamera oder zu einem von der erfindungsgemäßen Vorrichtung gesteuerten Scheinwerfer) von der Rechnereinheit errechnet werden. Hieraus wird ein statisches oder dynamisches Signal erzeugt, das über Funk oder Kabel übertragen wird und für die Ansteuerung des im Bedienelement eingebauten Motors, der die Kraft für die haptische Rückmeldung auf das Bedienelement erzeugt, verwendet wird.

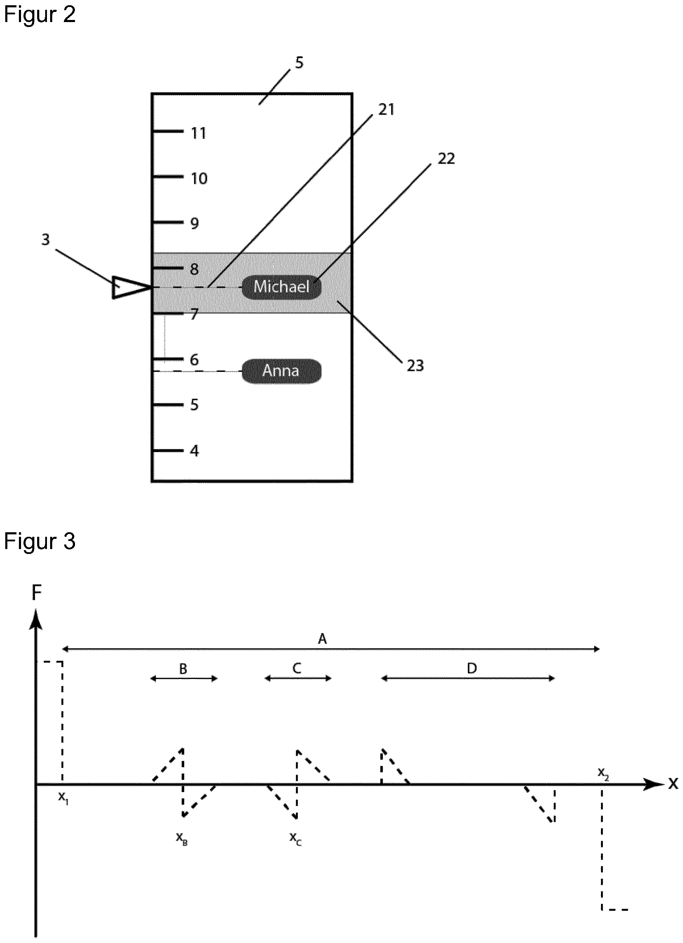

Mit dem erfindungsgemäßen Verfahren und dessen Vorrichtung lassen sich virtuelle Endanschläge simulieren (Figur 3: **A**). Wenn der Nutzer beispielsweise das Handrad **4** über einen Endanschlag (Figur 3: **x₁** oder **x₂**) hinweg dreht, so wird eine Gegenkraft erzeugt und das Handrad bewegt sich "federnd" zurück. Die Gegenkraft kann auch so stark sein, dass der Nutzer das Handrad gar nicht mehr über den Anschlagspunkt hinausbewegen kann.

Es können beliebige "Markierungen" (Figur 3: **B**; **C**; **D**) gesetzt werden. Diese können durch haptisches Feedback auf das Bedienelement übermittelt werden. So kann eine mechanische Widerstandssenke erzeugt werden: Kommt die Markierung auf dem Handrad durch Drehen in die unmittelbare Nähe des Referenzpunktes **3**, so wird die Markierung "angezogen" und damit die Drehung des Handrads beschleunigt, bis sie am Extrempunkt (Figur 3: **x_{B}**) ist, danach wird eine Gegenkraft aufgebaut die, je weiter sich die Markierung vom Referenzpunkt entfernt, immer schwächer wird. Dadurch wird eine Senke oder ein "Loch" simuliert (Figur 3: **B**). Es gibt auch den umgekehrten Fall. So kann ein Widerstandsberg simuliert werden: Je näher die Markierung dem Referenzpunkt kommt, desto größer wird eine Gegenkraft, bis man sich an dem höchsten Punkt befindet (Figur 3: **x_{C}**), von da an verhält es sich umgekehrt (Figur 3: **C**). Es können auch beliebige Muster (erhabenes oder versenktes Plateau, Rattern, Riffelblech, Signale ähnlich Morsezeichen, Vibrieren, dynamische oder statische Schwergängigkeit/Leichtgängigkeit, Überwachung eines definierten Zwischenbereiches (Figur 3: **D**) usw.) nachgebildet werden.

Eine dynamische Reibung beim Drehen des Handrads, die elektronisch verstellt werden kann, gibt es bisher nicht. Daher sieht die Erfindung auch vor, jede Art von Leicht- oder Schwergängigkeit einer Bewegungsachse auf dem Handrad zu simulieren. Beispielsweise kann durch Auslesen des nötigen Stroms am Motor festgestellt werden, wie schwergängig eine Achse ist bzw. mit wieviel Last sie beaufschlagt ist. Eine Rechnereinheit kann dies durch eine entsprechende Gegenkraft auf das Handrad nachstellen. Es wirkt also so, als ob die tatsächliche Schwergängigkeit einer Achse (und damit die Kraft, die ein Motor aufwenden muss) auf das Handrad übertragen wird. Dieses Verhalten kann man beliebig mit einem Skalierungsfaktor versehen (also verstärken oder abschwächen) oder dynamisch nach bestimmten Vorgaben oder anderen Einflussfaktoren gestalten.

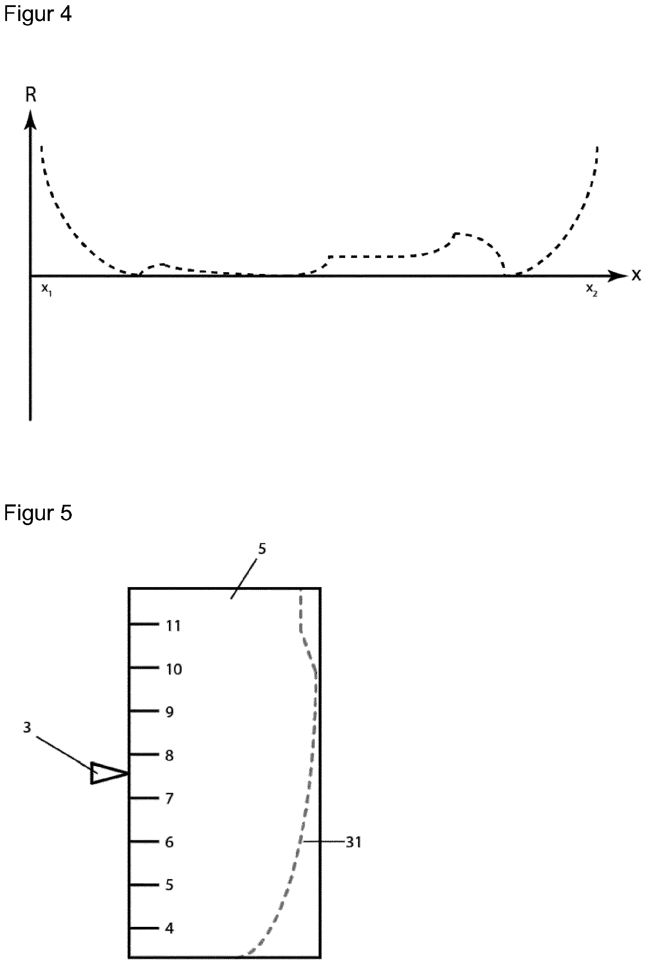

Damit der Nutzer jederzeit die Zuordnung der Handradumdrehung zu den aktuellen Werten auf dem Objektiv oder einer mechanischen Bewegungsachse (z.B. Remote Head an einem Kamerakran) bekommt, wird bislang nur ein manuell beschriftbarer Ring verwendet, der allenfalls durch Neuschreiben oder Austauschen aktualisiert werden kann. Um bestimmte Markierungen (Marken) zu treffen oder aktuelle Informationen zum Stand oder Schwergängigkeit der motorisch betriebenen Bewegungsachse zu bekommen, kann ein Display oder sogenanntes ePaper verwendet werden, das neben dem Bedienelement angeordnet ist (das Handrad komplett umfasst) und die Positionen der Objekte (Objektzuordnung) oder anderweitige Informationen anzeigt. Im Gegensatz zu DE 10 2011 121 021 A1 ist dieses Display praktisch nahtlos um den Drehzylinder des Handrads angeordnet, um zu ermöglichen, dass beispielsweise mehrere Umdrehungen des Handrads für den gesamten Einstellbereich des Objektivs genutzt werden können. Die Skala auf dem Display aktualisiert sich dabei automatisch je nach Motorposition, um damit den gesamten Bereich des Objektivs oder Motorachse auf mehrere Umdrehungen abbilden zu können. D.h. die gleiche physikalische Stelle auf dem Handrad wird damit mehrfach wiederbenutzt, jedoch mit entsprechend unterschiedlichen Anzeigewerten. Diese Anzeigewerte aktualisieren sich dabei selbstständig, je nach Stellung des Handrads. Auch ist eine Aktualisierung der Anzeigewerte vorgesehen, wenn sich der Objektivtyp/Achsentyp ändert. Dies wird durch den Nutzer eingegeben oder optimalerweise automatisch erkannt. Auch ist eine dynamische Skala möglich, die den jeweiligen Widerstand der Motorachse optisch visualisiert (Figur 5) oder Symbole oder Texte für bestimmte Objekte vor der Kamera anzeigt (Figur 2). So lassen sich Positionen von Schauspielern mit Symbolen oder Texten verbinden, wobei die Symbole/Texte je nach Abstand der echten Akteure zur Kamera dynamisch auf der Anzeigeeinheit mitwandern. Auf einem Display kann dann ausgewählt werden, welches Objekt vor der Kamera man verfolgen möchte. Über Touchscreen, Tasten oder andere Eingabemöglichkeiten kann dieses aus den zur Verfügung stehenden Objekten ausgewählt werden. So kann z.B. ein Schauspieler ausgewählt werden, der dann vom Abstandsmessgerät erfasst wird und auf einem Display an entweder dem Bedienteil oder dem Bedienelement erscheint. Bewegt er sich vor der Kamera und ändert somit seinen Abstand zur Kamera, so wandert auch die Marke (kann auch ein beschreibender Text oder ein Symbol sein) auf dem Display des Handrads mit, so dass man der Marke manuell oder im unterstützten Ausführungsmodus folgen kann. Zusätzlich kann der Bereich um den Schärfepunkt eingeblendet werden, in dem die Tiefenschärfe gleich ist (Tiefenschärfebereich). Dies lässt eine sehr einfache Bedienung zu, da man als Nutzer durch entsprechende Bedienung lediglich sicherstellen muss, dass das Objekt im Tiefenschärfebereich liegt.

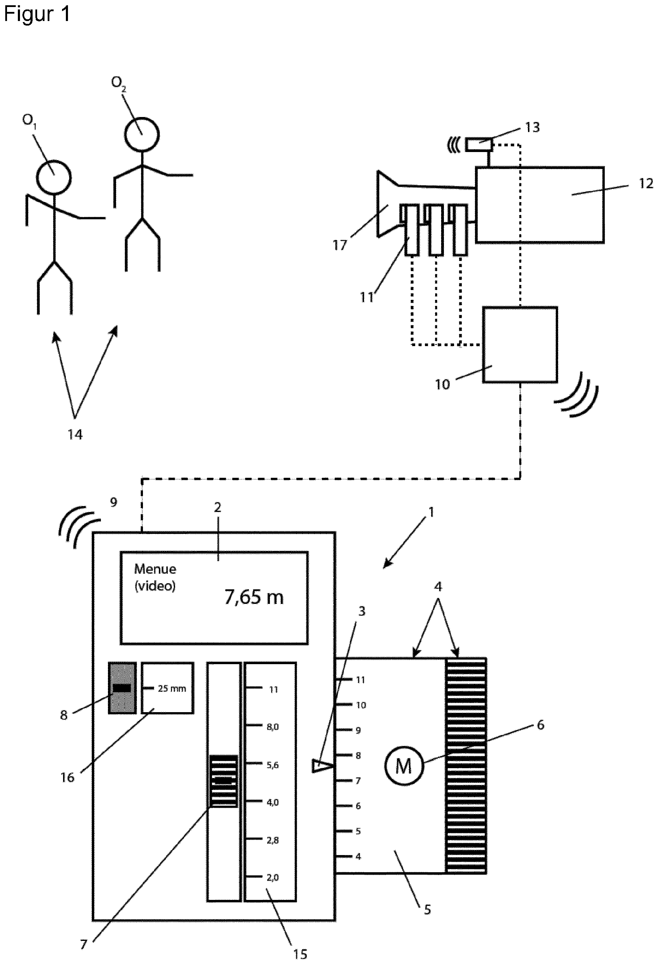

Auch ein unterstützter Ausführungsmodus ist möglich. In diesem Modus kann das Bedienelement selbstständig, angesteuert durch eine Recheneinheit, Bewegungen ausführen (z.B. das Handrad sich drehen), also sich selbstständig an definierte Punkte mit einer definierten Geschwindigkeit bewegen. Beispielsweise dann, wenn der Motor an der Bewegungsachse per Hand verstellt wird und sich das Handrad analog dazu dreht oder wenn ein Abstandssensor **13** den Abstand zu einem Objekt **14** (z.B. **O₁** oder **O₂**) vor der Kamera oder ein anderes Gerät eine bestimmte Einstellung für den jeweiligen Motor **11** oder die jeweiligen Motoren vorgibt (Figur 1). Auf dem Handrad wird die Zuordnung des Objekts zu einer bestimmten Entfernung Objektzuordnung **21** genannt. Der direkt die Objektzuordnung angrenzende bzw. umgebende Bereich wird Objektzuordnungsbereich **22** genannt (Figur 2). Dieser kann in den Einstellungen am Bedienteil und/oder der Rechnereinheit definiert werden.

Der Nutzer hat auch im unterstützten Ausführungsmodus jederzeit die Möglichkeit ohne aktives Umschalten einzugreifen und zu übersteuern. Dabei sind zwei Fälle möglich: Im ersten Fall verstellt sich das Bedienelement (in diesem Beispiel das Handrad **4**) von selbst und der Nutzer kann zusätzlich zur ausgeführten Bewegung des Bedienelements über die vorgegebene Position hinwegsteuern oder nachkorrigieren, im zweiten Fall bewegt sich das Bedienelement nicht von selbst (der angesteuerte Motor **11** hingegen schon) und der Nutzer kann durch entsprechendes Bewegen des Bedienelementes zusätzliche Bewegungen zu der bereits von der Rechnereinheit auf den Motor ausgeführten Bewegung aufaddieren oder subtrahieren. Anhand des folgenden Beispiels werden beide Fälle erläutert: In beiden Fällen soll ein Schauspieler **14** (z.B. **O₁**), der sich der Kamera nähert im Fokus gehalten werden. Ein Abstandssensor **13** misst laufend den Abstand der Schauspielers **14** (z.B. **O₁**) zur Kamera **12**. Im ersten Fall stellt die Rechnereinheit laufend den Fokus je nach Abstand nach und bewegt das Handrad analog dazu. Der Nutzer hat dennoch die Möglichkeit, Korrekturen des von der Rechnereinheit vorgegebenen Wertes durchzuführen, indem er sich zwar grundsätzlich vom bewegenden Handrad führen lässt, jedoch je nach Situation den Fokuspunkt ändern kann, indem er durch zusätzliche positive oder negative Kraftaufwendung die Handraddrehung über- oder untersteuert. Im zweiten Fall führt die Rechnereinheit dem Schauspieler den Fokus je nach Abstand zwar ebenfalls nach, bewegt aber das Handrad nicht dazu. Der Nutzer hat nun die Möglichkeit, mit positiven oder negativen Drehungen um den aktuellen Punkt ein Offset auf die von der Rechnereinheit durchgeführte Vorgabe aufzuaddieren oder abzuziehen. Um dies nutzerfreundlicher zu gestalten kann der Nullpunkt (also der Punkt an dem das zusätzliche Offset null ist) in einer Senke (Figur 3: **x_{B}**) liegen.

Um eine weitere Variante des unterstützten Ausführungsmodus des Handrads zu ermöglichen (d.h. beispielsweise einem Objekte **14** mit der Schärfe zu folgen) ist es möglich, eine durch die Rechnereinheit vorgegebene Kraft auf die Drehung des Handrads in positiver oder negativer Richtung anzuwenden, die den Nutzer in durch Einstellung festgelegter Stärke auf dem richtigen Schärfewert hält (ähnlich einer entsprechend gefühlten magnetischen Anziehung vom zu verfolgenden Objekt zum Referenzpunkt in einem definierten Umkreis um die Objektzuordnung auf dem Handrad). Dennoch ist dies kein Automatikbetrieb im klassischen Sinne. Denn es ist möglich, die automatische Drehung jederzeit durch manuelles Eingreifen ggf. vorübergehend zu stoppen (dies kann auch durch aktives Übersteuern aus dem Einflussbereich heraus erfolgen, der die zu verfolgende Objektzuordnung **21** umgibt und innerhalb dessen ein Nachführen erfolgt) und in dem Moment kann die Verfolgung des Objektes bei entsprechender Voreinstellung abgeschaltet werden.

Auch ist es möglich den unterstützen Modus beispielsweise beim Umgreifen der Hand am Handrad durch gewisse Gesten auf einem Bedienelement ggf. vorübergehend zu aktivieren, um einen kontinuierlichen Betrieb zu gewährleisten.

Unter Gesten kann ein Auswerten des Impulses oder der Kraft verstanden werden, mit der der Nutzer das Handrad dreht oder anhält. Alternativ kann darunter der Druck auf einen ggf. drucksensitiven Taster verstanden werden. Anstelle des Tasters kann auch ein Sensor am Handrad feststellen, wenn die Hand das Handrad loslässt.

Wird im unterstützten Ausführungsmodus ein Objekt **O₁** verfolgt und soll die Verfolgung auf ein anderes Objekt **O₂** gewechselt werden, so kann der Nutzer durch Aufwenden einer definierten zusätzlichen Kraft auf die Drehung des Handrads den ersten Objektzuordnungsbereich verlassen und aktiv in den zweiten Objektzuordnungsbereich drehend wechseln. Dort wird nun vom unterstützten Ausführungsmodus auf das zu verfolgende Objekt **O₂** scharf gestellt und ab nun dieses Objekt weiter verfolgt. Alternativ dazu kann auch durch Auswahl auf einem Bildschirm (z.B. Touchscreen) **2** oder **5** ein Objektwechsel vollzogen werden.

Anstelle der automatischen Scharfstellung auf einen zuvor festgelegten Punkt des Objekts beim Eintritt in den Objektzuordnungsbereich (z.B. automatisches Scharfstellen auf die Augen des Schauspielers, sobald man in den Objektzuordnungsbereich gelangt) kann auch die letzte Einstellung des manuellen Schärfezugs und damit ein damit festgelegter Offset zum festgelegten Punkt des Objekts beibehalten werden (z.B. wurde kurz nach Eintritt in den Objektzuordnungsbereich manuell auf den Hinterkopf scharfgestellt, mit einem Offset zu den Augen des Schauspielers). Dieser Offset wird dann beim unterstützten Ausführungsmodus beibehalten.

In einem weiteren unterstützten Ausführungsmodus wird solange von der Rechnereinheit keine Kraft auf die Drehung des Handrads ausgeübt, wie sich das vom Nutzer vorgegebene Objekt innerhalb des Tiefenschärfebereich (in diesem Bereich **23** sind alle auch in unterschiedlichen Abständen befindliche Objekte scharf) befindet. Besteht die Gefahr, dass der Nutzer den Tiefenschärfebereich **23** verlässt, so kann die Rechnereinheit durch entsprechende Ausübung einer unterstützenden Kraft auf das Handrad sicherstellen, dass dieser Bereich nicht versehentlich verlassen wird. Erst wenn der Nutzer mit einer entsprechen starken Kraft den Bereich verlässt, schaltet die Rechnereinheit diesen die Bereichsgrenzen überwachenden unterstützenden Modus ab. Dieser kann auch nur vorübergehend abgeschaltet sein und sich wieder einschalten, sobald ein neues Objekt in den Tiefenschärfebereich kommt.

Des Weiteren ist es möglich, die Schärfeebene, die (berechnete oder gemessene) Tiefenschärfe, die Aufnahmeobjekte im Aufnahmeset oder andere sinnvolle Informationen auf dem umlaufenden Display **5** des Handrads **4** oder dem Display **2** des Bedienteils einzublenden. Dabei kann das Display **5** entweder fest mit dem Bedienteil **1** verbunden sein, während die Anzeige hinreichend schnell aktualisiert wird und sich lediglich das Handrad **4** dreht, oder Handrad und umlaufendes Display **5** sind eine Einheit und drehen sich gemeinsam.

Die Anzeige auf einem der Displays kann eine Ansicht aus der Vogelperspektive oder eine seitliche Perspektive symbolisch oder im aktuellen Videobild überlagert darstellen. Damit sind beispielsweise die Grenzen der Schärfenzone für den Nutzer sichtbar und er kann sich bei der Bedienung danach richten. Zur besseren Visualisierung können diese Bereiche auch mittels eines Lasers oder eines anderen optischen Projektionsmechanismus ins Aufnahmeset projiziert werden.

Es sei nochmal betont, dass sämtliche Verfahren oder Vorrichtungen, die am Beispiel des Handrades erläutert wurden, analog dazu mit Anpassungen auch auf einer Schieberegler angewendet werden können. Bei einem Schieberegler kann dieser z.B. in analoger Weise, anstelle des auf mehrere Rotationen angewandten Drehens beim Handrad, nach Auslenkung wieder in die Ausgangsstellung zurückgelangen.

Die vorgenannte Erfindung kann in allen Bereichen des Film- und Broadcastbereichs eingesetzt werden.

Damit kann beispielsweise Unterstützung beim Einstellen von Objektivparametern, bei der Bedienung von Motioncontrolanwendungen (z.B. schwenkbarer Kamerakopf, Kameradollies, Kamerakräne, schwenkbare Lichtsteueranlagen) und anderen Anwendungsbereichen gegeben werden. Dies hilft in Zeiten von immer höherer Bildauflösung dennoch präzise und exakt fokussieren zu können oder Arbeitsabläufe wesentlich schneller gestalten zu können. Zusätzlich kann damit auch z.B. die Helligkeit von Scheinwerfern o.ä. geregelt werden. Die Erfindung kann aber auch in anderen Bereichen der Technik genutzt werden.

### Figurenbeschreibung:

In den Figuren 1 bis 5 sind beispielhaft die erfindungsgemäße Vorrichtung sowie Kraft- und Widerstandsverläufe im erfindungsgemäßen Verfahren dargestellt.

In der **Figur 1** ist ein Bedienteil **1** mit einem Display **2** dargestellt, das folgende Bedienelemente aufweist: ein Handrad **4**, ein Schieberegler **7** und ein Joystick **8**. Auf dem Handrad **4** ist ein umlaufendes Display **5** angebracht. Am Schieberegler ist ebenfalls ein Display **15** und am Joystick (Rocker) ein Display **16** angebracht. Ein Referenzpunkt **3**, der ortsfest am Bedienteil **1** angebracht ist, zeigt den aktuellen Stand des Motors **11** (für eine Bewegungsachse des Objektivs **17**) auf dem umlaufenden Display **5** an. Ein Motor, der eine Kraft auf ein Bedienelement ausüben kann, ist beispielhaft als Motor **6** im Handrad **4** gezeigt. Dieser kann auch im Schieberegler **7** oder Joystick **8** vorhanden sein. Über eine Funk- oder Kabelverbindung **9** ist das Bedienteil **1** über eine Rechnereinheit **10** mit einem Motor **11** zum Antrieb einer Achse eines Objektivs **17** verbunden. Die Rechnereinheit **10** kann alternativ auch im Bedienteil **1** untergebracht sein. Ein an der Kamera **12** angebrachter Abstandsmesser **13** misst fortlaufend den Abstand zu Aufnahmeobjekten **14** (**O₁**, **O₂**)

In der **Figur 2** ist ein Ausschnitt des umlaufenden Displays **5** gezeigt. Der Referenzpunkt **3** ist dabei ortsfest am Bedienteil **1** angebracht, während sich das umlaufende Display **5** in dieser Variante mit dem Handrad **4** drehen kann. Der Referenzpunkt **3** zeigt hier die aktuelle Einstellung auf ein Objekt. Die gestrichelten Linien **21** zeigen Objektzuordnungen, also die Zuordnung eines realen Objekts (in diesem Falle jeweils des Schauspielers "Michael" und der Schauspielerin "Anna") auf ein Symbol am Handrad **4**. Ein definierter Bereich um jeweils eine Objektzuordnung **21** herum wird Objektzuordnungsbereich **22** des Objekts genannt (dunkel hinterlegter Bereich des Namens). Der Tiefenschärfebereich **23** ist grau hinterlegt und befindet sich je nach berechneter Tiefenschärfe um den Referenzpunkt 3 herum.

In der **Figur 3** wird anhand einer Grafik die Einwirkung einer von der Rechnereinheit **10** vorgegeben Kraft **F** auf die Drehbewegung in Anhängigkeit der Handraddrehstellung **x** gezeigt. An der Stelle **x₁** und **x₂** sind Endanschläge dargestellt, die die Außengrenzen des gesamten Verstellbereichs **A** definieren und bei denen die Gegenkraft auf das Handrad **4** sprunghaft ansteigt. Im Bereich dazwischen sind unterschiedliche Kraftmuster gezeigt. Der Bereich **B** zeigt eine "Senke", bei der die von der Rechnereinheit **10** vorgegebene Kraft auf das Handrad zunimmt, je näher man dem Extrempunkt **x_{B}** kommt (dies kann der gewünschte Schärfepunkt auf einem Objekt/Objektzuordnungspunkt **21** sein), Bereich **C** zeigt einen "Berg" mit dem Extrempunkt **x_{C}** und damit den umgekehrten Fall. Im Bereich **D** wird die unterstützende Kraft gezeigt, die den Nutzer in einem bestimmten Bereich z.B. Tiefenschärfebereich hält, und an den Grenzen vor dem versehentlichen Verlassen des Bereichs schützt.

In der **Figur 4** wird exemplarisch ein dynamischer Widerstand **R** aufgezeigt, der von der Position **x** des Handrads **4** abhängig ist. An den Außengrenzen **x₁** und **x₂** hin nimmt dieser stetig zu. Im Zwischenbereich ist der sich verändernde Widerstand einer mechanischen Achse dargestellt, so wie er bei ortsabhängiger Schwergängigkeit auftreten, durch Auslesen des Motorstromes festgestellt und von der Rechnereinheit **10** in entsprechende Kräfte auf das Handrad **4** umgewandelt werden kann.

In der **Figur 5** ist ein Ausschnitt des umlaufenden Displays **5** gezeigt. Der Referenzpunkt **3** ist wie in Figur 2 ortsfest am Bedienteil **1** angebracht, während sich das umlaufende Display **5** in dieser Variante mit dem Handrad **4** drehen kann. Die gestrichelte Linie **31** zeigt dabei grafisch den Widerstand der mechanischen Bewegungsachse in Abhängigkeit von der Stellung des Handrads.

### Bezugszeichenliste:

- 1: Bedienteil
- 2: Display am Bedienteil
- 3: Referenzpunkt
- 4: Handrad
- 5: Umlaufendes Display
- 6: Motor des Handrads (elektromechanisches Element)
- 7: Schieberegler
- 8: Joystick (Rocker)
- 9: Kabel- oder Funkverbindung
- 10: Rechnereinheit
- 11: Motor
- 12: Kamera
- 13: Abstandssensor
- 14: Aufnahmeobjekt (hier O₁ und O₂)
- 15: Display am Schieberegler
- 16: Display am Joystick (Rocker)
- 17: Objektiv
- 21: Objektzuordnung
- 22: Objektzuordnungsbereich
- 23: Tiefenschärfebereich
- 31: Grafische Darstellung des mechanischen Widerstands
- A: Gesamter Verstellbereich
- B: Simulierte Senke
- C: Simulierter Berg
- D: Bereich in dem ein Objekt gehalten werden soll
- x: Handraddrehstellung
- x₁, x₂: Endanschläge
- x_{B}, x_{C}: Extrema
- F: Kraft auf das Handrad
- R: Widerstand einer Bewegungsachse

## Patentansprüche

1. Verfahren zur Steuerung oder Regelung von Motoren von Bewegungsachsen von Geräten im Film- und Broadcastbereich,
bei dem
I. mit einem Bedienteil (1), bestehend aus mindestens einem Bedienelement (4; 7) mindestens ein Motor (11) per Funk oder per Kabel über eine Rechnereinheit (10) gesteuert wird,
II. und bei dem das Bedienteil ein elektromechanisches Element (6) aufweist,
III. wobei das Bedienelement entweder in Gestalt eines Handrads (4) oder eines Schiebereglers (7) bedienbar ist,
IV. und in mindestens dem einen Bedienelement (4; 7) des Bedienteils das elektromechanische Element (6) vorhanden ist, durch das eine Kraft auf das Bedienelement in dessen positiver oder negativer Bewegungsrichtung ausgeübt wird,
V. die dort eine haptische Rückmeldung erzeugt,
VI. diese Kraft dynamisch durch eingegebene oder ausgelesene Parameter über die Rechnereinheit verändert wird, und
VII. diese Kraft manuell übersteuert werden kann,
VIII. und wobei die ausgelesenen Parameter in Abhängigkeit
- der Position eines Aufnahmeobjektes zu einer Kamera oder dem zu steuernden Gerät oder
- der sich ändernden Schwergängigkeit oder Beaufschlagung von Last einer Bewegungsachse des zu steuerndes Gerätes oder
- eines anderen Gerätes, das eine bestimmte Einstellung für den Motor der zu steuernden Kamera oder des zu steuernden Geräts vorgibt,
erzeugt und von der Rechnereinheit verarbeitet werden.

2. Verfahren zur Steuerung oder Regelung von Motoren von Bewegungsachsen von Geräten im Film- und Broadcastbereich,
bei dem
i. mit einem Bedienteil (1), bestehend aus mindestens einem Bedienelement (4; 7), mindestens ein Motor (11) per Funk oder per Kabel über eine Rechnereinheit (10) gesteuert wird,
ii. und bei dem das Bedienteil ein elektromechanisches Element (6) aufweist,
iii. wobei das Bedienelement entweder in Gestalt eines Handrads (4) oder eines Schiebereglers (7) bedienbar ist,
iv. und in mindestens dem einen Bedienelement (4; 7) des Bedienteils das elektromechanische Element vorhanden ist, durch das eine Kraft auf das Bedienelement in dessen positiver oder negativer Bewegungsrichtung ausgeübt wird, die dort eine haptische Rückmeldung erzeugt,
v. diese Kraft dynamisch durch eingegebene oder ausgelesene Parameter über die Rechnereinheit verändert wird,
vi. wobei ein Parameter das Drehen des Handrads bzw. Verschieben des Schiebereglers per Hand des Nutzers ist, bei dem der Impuls oder die Kraft ausgewertet wird, mit dem der Nutzer das Bedienteil bedient,
vii. oder ein Parameter die Eingabe auf dem Bedienelement ist, die durch den Druck auf einen drucksensitiven Taster oder die Auswahl auf einem Bildschirm (2; 5) ausgeübt wird,
viii. wodurch durch die Rechnereinheit eine dynamische Kraft errechnet wird, die das Handrad bzw. den Schieberegler von selbst auf eine bestimmte Position oder mit einer definierten Geschwindigkeit in eine bestimmte Richtung dreht bzw. verschiebt,
ix. und wobei diese Kraft manuell übersteuert werden kann.

3. Verfahren nach Anspruch 1 oder 2, wobei die durch das elektromechanische Element erzeugte Kraft auf das Bedienelement
- in einem bestimmten Zeitpunkt oder Zeitraum und/oder
- in Abhängigkeit von der Position des Bedienelements und/oder
- der Position eines Aufnahmeobjektes
- so niedrig oder nicht vorhanden ist, so dass das Bedienelement ohne großen Widerstand bedient werden kann, und
- in einem anderen Zeitpunkt oder Zeitraum und/oder
- an anderer Position des Bedienelements und/oder
- an anderer Position eines Aufnahmeobjektes
eine individuell einstellbare oder dynamische Kraft auf das Bedienelement ausgeübt werden kann.

4. Verfahren nach einem der Ansprüche 1 bis 3, wobei die haptische Rückmeldung mindestens einen Endanschlag oder mindestens eine Begrenzung eines Dreh- oder Schiebebereichs/Einstellbereichs kennzeichnet.

5. Verfahren nach einem der Ansprüche 1 bis 4, wobei durch die haptische Rückmeldung eine Markierung oder ein Kraft-Muster dargestellt oder ein mechanisches Verhalten nachgebildet werden kann.

6. Verfahren nach einem der Ansprüche 1 bis 5, wobei durch das elektromechanische Element eine Kraft auf das Bedienelement so ausgeübt wird, dass sich das Bedienelement selbstständig an definierte Punkte mit einer definierten Geschwindigkeit bewegt und der Nutzer bei Bedarf ohne aktives Umschalten jederzeit eingreifen und manuell übersteuern kann.

7. Verfahren nach einem der Ansprüche 1 bis 6, wobei mindestens die Position eines Aufnahmeobjekts mit einem Abstandssensor erfasst wird.

8. Verfahren nach Anspruch 1 bis 7, wobei die Position mindestens eines Aufnahmeobjekts an einem Display, das an dem Bedienteil oder dem Bedienelement angebracht ist, angezeigt und dynamisch angepasst und ggf. eines davon als aktives Objekt gekennzeichnet wird.

9. Verfahren nach einem der Ansprüche 1 bis 8, wobei die Verfolgung bestimmter Objekte an einem Touchscreen am Bedienteil oder am Bedienelement ausgewählt werden können.

10. Verfahren nach einem der Ansprüche 1 bis 9, wobei das elektromechanische Element nur dann eine nachführende Kraft auf das Bedienelement ausübt, wenn ein Objekt, das im Tiefenschärfebereich oder einem anderen definierten Bereich gehalten werden soll, diesen zu verlassen droht.

11. Verfahren nach einem der Ansprüche 1 bis 10, wobei das elektromechanische Element eine nachführende Kraft auf das Bedienelement zur Verfolgung eines Objekts ausübt, sobald der Nutzer das Bedienelement in einen zuvor festgelegten Bereich um dieses Objekt herum hineinführt.

12. Verfahren nach einem der Ansprüche 1 bis 11, wobei bei einem als Handrad ausgebildeten Bedienelement, um dessen Umfang ein umlaufendes Display angebracht ist, bei einer Spreizung des gesamten Einstellbereichs auf mehrere Umdrehungen, der sichtbare Displaybereich laufend auf den aktuellen Bereich aktualisiert wird.

13. Verfahren nach einem der Ansprüche 1 bis 12, wobei Informationen in das Aufnahmeset projiziert werden, die auf den eingegebenen oder ausgelesenen Parametern in Abhängigkeit eines Aufnahmeobjektes oder des sich ändernden Zustands eines Objektes oder eines Gerätes basieren und diese Informationen das Aufnahmebild nicht stören.

14. Vorrichtung zur Steuerung oder Regelung von Motoren von Bewegungsachsen von Geräten im Film- und Broadcastbereich
bestehend aus einer Rechnereinheit (10) und einem Bedienteil (1), das ein elektromechanisches Element (6) aufweist,
und das Bedienteil (1) mit mindestens einem Bedienelement (4; 7) ausgestattet ist und über Funk oder Kabel (9) über die Rechnereinheit (10) zumindest indirekt mit mindestens einem Motor (11) verbunden ist,
wobei
das Bedienelement entweder ein Handrad (4) oder ein Schieberegler (7) ist, und
in mindestens dem einen Bedienelement (4; 7) des Bedienteils (1) das elektromechanische Element (6) vorhanden ist, durch das eine Kraft auf das Bedienelement in dessen positiver oder negativer Bewegungsrichtung ausgeübt werden kann, die dort eine haptische Rückmeldung erzeugt,
und das Bedienteil (1) so ausgelegt ist, dass diese Kraft durch eingegebene oder ausgelesene Parameter über die Rechnereinheit (10) veränderbar ist,
und das Bedienelement (4; 7) so ausgelegt ist, dass diese Kraft am Bedienelement manuell übersteuert werden kann,
und wobei die Rechnereinheit (10) so ausgelegt ist,
dass die ausgelesenen Parameter in Abhängigkeit
- der Position eines Aufnahmeobjektes (14) zu einer Kamera oder dem zu steuernden Gerät oder
- der sich ändernden Schwergängigkeit oder Beaufschlagung von Last einer Bewegungsachse des zu steuerndes Gerätes oder
- eines anderen Gerätes, das eine bestimmte Einstellung für den Motor der zu steuernden Kamera oder des zu steuernden Geräts vorgibt,
erzeugt und von der Rechnereinheit verarbeitet werden.

15. Vorrichtung zur Steuerung oder Regelung von Motoren von Bewegungsachsen von Geräten im Film- und Broadcastbereich
bestehend aus einer Rechnereinheit (10) und einem Bedienteil (1), das ein elektromechanisches Element (6) aufweist,
und das Bedienteil (1) mit mindestens einem Bedienelement (4; 7) ausgestattet ist und über Funk oder Kabel (9) über die Rechnereinheit (10) zumindest indirekt mit mindestens einem Motor (11) verbunden ist,
wobei
das Bedienelement entweder ein Handrad (4) oder ein Schieberegler (7) ist, und
in mindestens dem einen Bedienelement (4; 7) des Bedienteils (1) das elektromechanische Element (6) vorhanden ist, durch das eine Kraft auf das Bedienelement in dessen positiver oder negativer Bewegungsrichtung ausgeübt werden kann, die dort eine haptische Rückmeldung erzeugt,
und das Bedienteil (1) so ausgelegt ist, dass diese Kraft über die Rechnereinheit (10) veränderbar ist,
- wobei ein Parameter das Drehen des Handrads bzw. Verschieben des Schiebereglers per Hand des Nutzers ist, bei dem der Impuls oder die Kraft ausgewertet wird, mit dem der Nutzer das Bedienteil bedient,
- oder ein Parameter die Eingabe auf dem Bedienelement ist, die durch den Druck auf einen drucksensitiven Taster oder die Auswahl auf einem Bildschirm (2; 5) ausgeübt wird,
- und die Rechnereinheit dazu eingerichtet ist, eine dynamische Kraft zu errechnen, die das Drehen bzw. Verschieben per Hand unterstützt und dazu eingerichtet ist, eine dynamische Kraft zu errechnen, die das Handrad bzw. den Schieberegler von selbst auf eine bestimmte Position oder mit einer definierten Geschwindigkeit in eine bestimmte Richtung dreht bzw. verschiebt, und
- das Bedienelement (4; 7) so ausgelegt ist, dass diese Kraft am Bedienelement (4; 7) manuell übersteuert werden kann.

16. Vorrichtung nach Anspruch 14 oder 15, wobei mindestens das eine Bedienelement (4; 7) das Handrad (4) ist, um dessen Achse ein umlaufendes Display (5) angebracht ist.

17. Vorrichtung nach einem der Ansprüche 14 bis 16, wobei die Rechnereinheit (10) den mindestens einen der eingegebenen oder ausgelesenen Parameter aus den Werten eines Abstandssensors (13) errechnen und daraus ein statisches oder dynamische Signal über Funk oder Kabel (9) für die Ansteuerung des elektromechanischen Elements (6) erzeugen kann, der die Kraft für die haptische Rückmeldung auf das Bedienelement (4; 7) erzeugt.

## Claims

1. Method for controlling or regulating motors of motion axes of devices in the film and broadcast sector,
with which
I. at least one motor (11) is controlled by radio or by cable via a processing unit (10) using a control unit (1) consisting of at least one operating element (4, 7),
II. and in which the control unit has an electromechanical element (6),
III. wherein the operating element can be operated either in the form of a handwheel (4) or a slide controller (7),
IV. and the electromechanical element (6) is present in at least one operating element (4; 7) of the operating part, by means of which a force is exerted on the operating element in its positive or negative direction of movement,
V. which generates haptic feedback there,
VI. this force is changed dynamically by parameters entered or read out via the processing unit, and
VII. this force can be overridden manually,
VIII.and where the read-out parameters are generated depending on
- the position of a recording object in relation to a camera or the device to be controlled or
- the changing sluggishness or load on a motion axis of the device to be controlled or
- of another device that specifies a certain setting for the motor of the camera or device to be controlled
and processed by the processing unit.

2. Method for controlling or regulating motors of motion axes of devices in the film and broadcast sector,
with which
I. at least one motor (11) is controlled by radio or by cable via a processing unit (10) using a control unit (1) consisting of at least one operating element (4; 7),
II. and in which the control unit has an electromechanical element (6),
III. whereby the operating element can be operated either in the form of a handwheel (4) or a slide controller (7),
IV. and the electromechanical element is present in at least one operating element (4; 7) of the control unit, by means of which a force is exerted on the operating element in its positive or negative direction of movement, which generates haptic feedback there,
V. this force is changed dynamically by parameters entered or read out via the processing unit,
VI. where one parameter is the turning of the handwheel or the shifting of the slide controller by the user's hand, in which the impulse or force with which the user operates the control unit is evaluated,
VII. or a parameter is the input on the control element, which is exerted by pushing a pressure-sensitive button or making a selection on a screen (2; 5),
VIII.whereby the processing unit calculates a dynamic force that automatically turns or moves the handwheel or slide controller to a specific position or at a defined speed in a specific direction,
IX. and whereby this force can be overridden manually.

3. Method according to claim 1 or 2,
**whereby** the force generated by the electromechanical element on the operating element
- at a specific time or period and/or
- depending on the position of the operating element and/or
- the position of a recording object
- being so low or non-existent that the operating element can be operated without strong resistance, and
- at another time or period and/or
- at a different position of the operating element and/or
- at another position of a recording object,
an individually adjustable or dynamic force can be exerted on the operating element.

4. Method according to any one of the claims 1 to 3,
**whereby** the haptic feedback indicates at least one end stop or at least one limitation of a rotational or sliding range/adjustment range.

5. Method according to any one of the claims 1 to 4,
**whereby** the haptic feedback represents a mark or a force pattern or emulates a mechanical behavior.

6. Method according to any one of the claims 1 to 5,
**whereby** the electromechanical element exerts a force on the operating element in such a way that the operating element moves independently to defined points at a defined speed and the user is able to intervene if necessary and to manually override at any time without active switching.

7. Method according to any one of the claims 1 to 6,
**whereby** at least the position of one recording object is detected by a distance sensor.

8. Method according to any one of the claims 1 to 7,
**whereby** the position of at least one recording object is displayed and dynamically adjusted on a display attached to the control unit or the operating element and one of them possibly being marked as the active object.

9. Method of any one of the claims 1 to 8,
**whereby** the tracking of certain objects is selectable on a touch screen on the control unit or on the operating element.

10. Method of any one of the claims 1 to 9,
**whereby** the electromechanical element exerts a tracking force on the operating element only when an object to be held in the depth-of-field range or another defined range threatens to leave it.

11. Method of any one of the claims 1 to 10,
**whereby** the electromechanical element exerts a tracking force on the operating element for tracking an object as soon as the user moves the operating element into a predetermined area around this object.

12. Method of any one of the claims 1 to 11,
**whereby** an operating element is designed as a handwheel, around which a circumferential display is fitted, when the entire setting range is spread over several rotations, the visible display range is continuously updated to the current range.

13. Method of any one of the claims 1 to 12,
**whereby** information is projected into the recording set based on the entered or read-out parameters in dependence on a recording object or the changing state of an object or a device, and said information is not interfering with the recording image.

14. Device for controlling or regulating motors for motion axes of equipment in the film and broadcast sector, consisting of a processing unit (10) and a control unit (1) which is equipped with an electromechanical element (6) and where the control unit (1) is equipped with at least one operating element (4; 7;) and is connected at least indirectly to at least one motor (11) by radio or cable (9),
**whereby** the operating element is either a handwheel (4) or a slide controller (7) and in at least one of the operating elements (4; 7) of the control unit (1) an electromechanical element exists, by means of which a force is exerted on the operating element in its positive or negative direction of movement, which generates haptic feedback there,
and the control unit (1) is designed so that this force can be changed by parameters entered or read out via the processing unit (10),
and the operating element (4; 7) is designed so that this force can be overridden manually on the operating element,
and wherein the processing unit (10) is designed such that the read-out parameters are generated depending on
- the position of a recording object (14) to a camera or the device to be controlled or
- the sluggishness or load on a motion axis of the device to be controlled or
- of another device that specifies a certain setting for the motor of the camera or device to be controlled,
and processed by the processing unit.

15. Device for controlling or regulating motors of motion axes of devices in the film and broadcasting sector
consisting of a processing unit (10) and a control unit (1), which has an electromechanical element (6),
and the control unit (1) is equipped with at least one operating element (4; 7) and is at least indirectly connected to at least one motor (11) by radio or cable (9) via the processing unit (10),
**whereby**
the operating element is either a handwheel (4) or a slide controller (7), and in at least one operating element (4; 7) of the control unit (1)
the electromechanical element (6) is present, by means of which a force can be exerted on the operating element in its positive or negative direction of movement, which generates haptic feedback there,
and the control unit (1) is designed so that this force can be changed via the processing unit (10),
- whereby one parameter is the turning of the handwheel or moving of the slide controller by the user's hand, in which the impulse or force with which the user operates the control unit is evaluated,
- or a parameter is the input on the control element that is exerted by pushing a pressure-sensitive button or making a selection on a screen (2; 5),
- and the processing unit is set up to calculate a dynamic force which supports the rotation or movement by hand and is set up to calculate a dynamic force which automatically rotates or moves the handwheel or the slide controller to a specific position or at a defined speed in a specific direction, and
- the operating element (4; 7) is designed so that this force can be manually overridden at the operating element (4; 7).

16. The device of claim 14 or 15,
whereby at least one operating element (4; 7) is the handwheel (4), around the axis of which a rotating display (5) is mounted.

17. The device of any one of the claims 14 to 16,
**whereby** the processing unit (10) is able to calculate at least one of the parameters entered or read out from the values of a distance sensor (13) and uses it to generate a static or dynamic signal via radio or cable (9) for controlling the electromechanical element (6), which generates the force for the haptic feedback to the operating element (4; 7).

## Revendications

1. Procédé pour commande ou réglage de moteurs des axes de déplacement des appareils du domaine du film et de la radiodiffusion,
I. où une unité de commande (1), consistant au moins en un élément de commande (4 ; 7) asservit au moins un moteur (11) par radio ou connexion câblée à travers une unité informatique (10),
II. l'unité de commande comportant un élément électromécanique (6),
III. et dont l'élément de commande se présente soit sous forme d'un bouton de réglage manuel (4) ou d'un curseur (7),
IV. et où l'élément électromécanique (6) est présent au moins dans cet élément de commande (4 ; 7) exerçant une force sur l'élément de commande soit dans son sens de mouvement positif ou négatif,
V. qui génère un retour haptique à cet endroit,
VI. pouvant modifier cette force de manière dynamique par des paramètres entrés ou lus à travers l'unité informatique, et
VII. qui permet d'outrepasser manuellement cette force,
VIII. et où les paramètres lus sont générés en fonction
- de la position de l'objet à enregistrer par rapport à une caméra ou l'appareil à piloter, ou en fonction
- du changement de la rigidité de ou de la charge appliquée sur une axe de déplacement de l'appareil à piloter, ou
- d'un autre appareil qui détermine un certain réglage pour le moteur de la caméra ou de l'appareil à piloter,
et traités par l'unité informatique.

2. Procédé pour commande ou réglage de moteurs des axes de déplacement des appareils du domaine du film et de la radiodiffusion, où
i. où une unité de commande (1), consistant au moins en un élément de commande (4 ; 7) asservit au moins un moteur (11) par radio ou connexion câblée à travers une unité informatique (10),
ii. l'unité de commande comportant un élément électromécanique (6),
iii. et dont l'élément de commande se présente soit sous forme d'un bouton de réglage manuel (4) ou d'un curseur (7),
iv. et où l'élément électromécanique est présent au moins dans cet élément de commande (4 ; 7) exerçant une force sur l'élément de commande soit dans son sens de mouvement positif ou négatif qui génère un retour haptique à cet endroit,
v. modifiant cette force de manière dynamique par des paramètres entrés ou lus à travers l'unité informatique,
vi. l'un des paramètres étant la rotation du bouton de réglage manuel ou le glissement du curseur par la main de l'utilisateur où l'impulsion ou la force avec laquelle l'utilisateur agit sur l'unité de commande est analysée,
vii. ou bien où l'un des paramètres est l'entrée effectuée sur l'élément de commande faite par application d'une pression sur touche sensible à la pression ou par sélection sur écran (2 ; 5),
viii. où l'unité informatique calcule par la suite une force dynamique qui tourne/déplace dans un sens et de manière autonome le bouton de réglage manuel/curseur pour atteindre une position déterminée ou pour agir avec une vitesse déterminée,
ix. tout en permettant d'outrepasser cette force manuellement,

3. Procédé selon revendication 1 ou 2,
où la force exercée par l'élément électromécanique sur l'élément de commande est
- à un moment ou une période donnés et/ou
- en fonction de la position de l'élément de commande et/ou
- en fonction de la position de l'objet à enregistrer
- tellement faible ou absente, de façon à permettre l'opération de l'élément de commande sans trop de résistance, et permettant
- à un autre moment ou une autre période et/ou
- à une autre position de l'élément de commande et/ou
- à une autre position d'un objet à enregistrer
l'application d'une force dynamique réglable individuellement sur l'élément de commande.

4. Procédé selon l'une des revendications 1 à 3,
où le retour haptique marque au moins une position de fin de course ou au moins une limitation d'une plage de rotation ou de glissement/de réglage.

5. Procédé selon l'une des revendications 1 à 4,
où le retour haptique permet la représentation d'un repérage ou d'un modèle de force ou bien la reproduction d'un comportement mécanique.

6. Procédé selon l'une des revendications 1 à 5,
où l'élément électromécanique exerce une force sur l'élément de commande pour que l'élément de commande se déplace de manière autonome à des points déterminés avec une vitesse déterminée tout en permettant à l'utilisateur d'intervenir à tout moment et d'outrepasser manuellement cette force en cas de besoin et sans commutation active.

7. Procédé selon l'une des revendications 1 à 6,
où un capteur de distance détecte au moins la position de l'objet à enregistrer.

8. Procédé selon revendication 1 à 7,
où un affichage monté sur l'unité ou l'élément de commande affiche et ajuste de manière dynamique la position d'au moins un objet à enregistrer, marquant éventuellement un des objets comme l'objet actif.

9. Procédé selon l'une des revendications 1 à 8,
permettant la sélection du suivi de certains objets à travers un écran tactile sur l'unité de commande ou sur l'élément de commande.

10. Procédé selon l'une des revendications 1 à 9,
où l'élément électromécanique exerce une force de suivi sur l'élément de commande uniquement lorsqu'un objet qui doit rester dans la zone de profondeur de champ ou dans une autre zone déterminée risque de sortir de celle-ci.

11. Procédé selon l'une des revendications 1 à 10,
où l'élément électromagnétique exerce une force de suivi sur l'élément de commande pour le suivi d'un objet, lorsque l'utilisateur introduit l'élément de commande dans une zone prédéfinie autour de l'objet en question.

12. Procédé selon l'une des revendications 1 à 11,
où la partie de l'affichage visible des éléments de commande conçus comme bouton de réglage manuel avec affichage sur toute la circonférence et une plage de réglage nécessitant plusieurs tours est toujours mise à jour à la zone actuelle.

13. Procédé selon l'une des revendications 1 à 12,
où des informations basées sur les paramètres entrés ou lus en fonction de l'objet d'enregistrement ou de la modification d'état d'un objet ou d'un appareil, sont projetées dans le plateau d'enregistrement sans que ces informations projetées interfèrent avec l'image enregistrée.

14. Dispositif pour commande ou réglage de moteurs des axes de déplacement des appareils du domaine du film et de la radiodiffusion,
consistant en une unité informatique (10) et une unité de commande (1) comportant un élément électromécanique (6),
l'unité de commande (1) étant équipée au moins d'un élément de commande (4 ; 7) et reliée au moins indirectement par radio ou connexion câblée (9) via l'unité de calcul (10) à au moins un moteur (11).
dont l'élément de commande se présente soit sous forme d'un bouton de réglage manuel (4) ou d'un curseur (7), et où l'élément électromécanique (6) est présent au moins dans cet élément de commande (4 ; 7) de l'unité de commande (1) exerçant une force sur l'élément de commande soit dans son sens de mouvement positif ou négatif, qui génère un retour haptique à cet endroit,
et où l'unité de commande (1) est conçue de façon à pouvoir modifier cette force par des paramètres entrés ou lus à travers l'unité informatique (10),
et où l'élément de commande (4 ; 7) est conçu de façon à pouvoir outrepasser manuellement cette force au niveau de l'élément de commande,
et où l'unité informatique (10) est conçue de façon à permettre la génération de paramètres lus en fonction
- de la position de l'objet à enregistrer (14) par rapport à une caméra ou l'appareil à piloter, ou en fonction
- du changement de la rigidité de ou de la charge appliquée sur une axe de déplacement de l'appareil à piloter, ou
- d'un autre appareil qui détermine un certain réglage pour le moteur de la caméra ou de l'appareil à piloter,
et traités par l'unité informatique

15. Dispositif pour commande ou réglage de moteurs des axes de déplacement des appareils du domaine du film et de la radiodiffusion,
consistant en une unité informatique (10) et une unité de commande (1) comportant un élément électromécanique (6),
l'unité de commande (1) étant équipée au moins d'un élément de commande (4 ; 7) et reliée au moins indirectement par radio ou connexion câblée (9) via l'unité de calcul (10) à au moins un moteur (11).
dont l'élément de commande se présente soit sous forme d'un bouton de réglage manuel (4) ou d'un curseur (7), et où l'élément électromécanique (6) est présent au moins dans cet élément de commande (4 ; 7) de l'unité de commande (1) exerçant une force sur l'élément de commande soit dans son sens de mouvement positif ou négatif, qui génère un retour haptique à cet endroit,
et où l'unité de commande (1) est conçue de façon à pouvoir modifier cette force à travers l'unité informatique (10),
- l'un des paramètres étant la rotation du bouton de réglage manuel ou le glissement du curseur par la main de l'utilisateur où l'impulsion ou la force avec laquelle l'utilisateur agit sur l'unité de commande est analysée,
- ou bien où l'un des paramètres est l'entrée effectuée sur l'élément de commande faite par application d'une pression sur touche sensible à la pression ou par sélection sur écran (2 ; 5),
- où l'unité informatique est configurée pour calculer par la suite une force dynamique qui tourne/déplace le bouton de réglage manuel/curseur dans un sens et de manière autonome pour atteindre une position déterminée ou pour agir avec une vitesse déterminée, et
- où l'élément de commande (4 ; 7) est conçu de façon à pouvoir outrepasser manuellement cette force au niveau de l'élément de commande (4 ; 7),

16. Dispositif selon revendication 14 ou 15,
où au moins un des éléments de commande (4 ; 7) est le bouton de réglage manuel (4) avec affichage sur toute sa circonférence (5).

17. Dispositif selon l'une des revendications 14 à 16,
où l'unité informatique (10) peut calculer à partir des valeurs obtenues par le capteur de distance (13) au moins un des paramètres entrés ou lus et générer avec celui-ci un signal statique ou dynamique par radio ou connexion câblée (9) pour commander l'élément électromécanique (6) qui génère la force pour le retour haptique sur l'élément de commande (4 ; 7).
